# EUROPEAN PATENT APPLICATION

(11) **EP 2 782 034 A1**
(43) Date of publication of application: **24.09.2014**
(21) Application number: 13787359.2
(22) Date of filing: 02.05.2013
(51) Int. Cl.: G06F 21/31, G06Q 20/40

(54) **METHOD AND SYSTEM FOR AUTHENTICATION AND PAYMENT BY USING PORTABLE TERMINAL**

(30) Priority: 10.05.2012 WO PCT/JP2012/062014; 07.01.2013 WO PCT/JP2013/050500; 18.04.2013 JP 2013098843
(71) Applicant: Tokyo Mechatronics Co., Ltd, Shinjuku-ku Tokyo 160-0004 (JP)
(72) Inventor: AWANO, Koichi, Kasukabe-shi Saitama 344-0016 (JP); SHIMIZU, Hiroyuki, Tokyo 157-0067 (JP)
(74) Representative: Harrison IP Limited
(86) International application number: PCT/JP2013/063234
(87) International publication number: WO 2013/168815

(57) **Abstract**

After a user and a dealer agree on business transaction, a password is inputted to a user mobile terminal (3) to produce an authentication ID for authentication. After the authentication succeeds, the mobile terminal transmits credit information and a user number to a server (5) to store them in the server. On the other hand, the dealer transmits a dealer number and a user number obtained from the user to the server using a dealer terminal (6). The server compares the received user number and the received dealer number with that stored in the server, respectively and transmits the credit information to the dealer terminal only when a result of the comparison accords. The dealer terminal executes a credit card transaction processing on the basis of the credit information.

## Description

### TECHNICAL FIELD

The present invention relates to a method and system for authentication and settlement using a mobile terminal, particularly, to the authentication and settlement by using the mobile terminal, for conducting personal authentication and making settlement having high security, by utilizing an ID pattern printed on a net card or bit data corresponding to the ID pattern.

### BACKGROUND ART

In a conventional settlement system by using a credit card, the settlement is generally executed by a dedicated terminal connected to a dedicated line. The dedicated terminal and dedicated line cannot be installed in the absence of credit and also cannot be used at a place such as a stall in which it is difficult to install them.

In case where an authentication is conducted and a settlement are made by using a general usage card such as a credit card, ATM card over the internet, since the personal authentication is executed by key-inputting a card number and a password, there is a risk that key-inputted numbers and signs are skimmed with phishing or kept in a dealer. Once the card number and password are stolen, there is a problem of permitting unauthorized use by only the key input.

In order to avoid the above problem, a general bank uses a method communicating with one another by using secret contents in a manner that a third party cannot know. The secret contents are numerals indicated in an authentication matrix table such as a random number table called the second identification number. For example, the same authentication matrix table is shared between a financial institution and a user. When a cash transaction is executed through the internet, the financial institution specifies positions on the authentication matrix table and requires the user transmitting numerals on the specified positions and thereafter confirms that the required numerals coincide with the numerals transmitted from the user. By doing so, the financial institution achieves the personal authentication by identifying as the user to who the financial institution required the specified numerals on the authentication matrix table. However, since the authentication matrix table is visually recognizable, it is not possible to resolve problems that the table is likely to be stolen or copied by anyone else and the result suffer damage from unauthorized use. In addition, since the numerals are essentially key-inputted, the authentication method using the random number table cannot fully hold security.

In other conventional art, there is a system in which a smartphone has a magnetic card reader for reading the general usage card and the user signs on the display of the smartphone to make the settlement. However, it remains vulnerable to unauthorized use or counterfeit of a credit card.

Also, the patent literature 1 discloses QR code system in which a camera picks up a QR code on which encoded information is arranged in two dimensions and the picked-up image of the QR code is decoded to give characters and others. The QR code is characterized by increasing dramatically the amount of information compared to the barcode and the like used for the usage cards. Further, there are a personal authentication system in which a parson's fingerprint or venous blood vessel is registered as an image for personal authentication and also there is a method using security token.

Furthermore, the patent literatures 2 and 3 disclose an apparatus for reading a fuse pattern code by a card reader. The apparatus comprises the card having card electrodes of fuse pattern specific to each user, printed with conductor, and a card reader having sensor electrodes arranged corresponding to the card electrodes in order to receive the card inserted and to read authentication code incorporated in the card electrodes.

### CITATION LIST

### Patent Literatures

Patent literature 1 JP-A-2009-187198
Patent literature 2 JP Patent No. 3092012
Patent literature 3 U.S. Patent No. 6196465

### SUMMARY OF INVENTION

### Technical Problem

It is an object of the present invention to provide a method and system for authentication and settlement using a convenient mobile terminal in which unauthorized use of information of the usage card could not be made by anyone else, even if the information such as a card number or a password is stolen.

### Solution to Problem

In an aspect of the present invention, a net card is issued. The net card has an ID pattern in addition to general information of the card number and password and others of the usage card. When a user uses the net card in a net transaction, a picture of the ID pattern of the net card is taken as an image by a camera. A bit data is read from the taken image. The bit data is converted into an authentication ID and then the authentication is conducted and the settlement are made, by using an application software (hereinafter called application) specific to each user, downloaded preliminarily. In another aspect of the present invention, a bit data stored in a memory is substituted for the ID pattern. The stored bit data is one identical to the bit data represented by the ID pattern. The stored bit data is converted into the authentication ID by inputting the password and starting the application.

Further, if a dealer downloads an application for dealer to a general smartphone or personal computer without preparing any dedicated line or terminal, the dealer can make the settlement after conducting authentication by using the net card of the user.

According to the other aspect of the present invention, in order to avoid a user trouble of taking a picture of the ID pattern by camera each time the user conducts the personal authentication, the bit data is stored in a memory when an image of the taken ID pattern is converted into the bit data, or the bit data is downloaded together with the application, the bit data is stored in the memory. In the case, when a predetermined password is inputted, the bit data stored in the memory is automatically read and converted into the authentication ID by the application, and thereafter the personal authentication is conducted and settlement are made.

According to the furthermore aspect of the present invention, 1 or more usage cards are previously registered in the net card. The user selects one of the registered usage cards at time when the user carries out a business transaction. The settlement is made by using the selected usage card between the user and the dealer. Advantageous Effects of Invention

The net card can be also used as the usage card. The ID pattern held on the net card or the password is inputted in the smartphone and changed into the bit data to convert it into the authentication ID which transmits through a communication line for executing authentication. Therefore, the authentication ID different from the inputted ID pattern or password is sent through the communication line. Accordingly, even if phishing is done for the authentication ID, since the authentication ID is not for inputting to the mobile terminal, it is safe from abuse.

Further, the application is designed to convert to the authentication ID on the basis of contents specific to each user. Therefore, even if ID pattern, password or authentication ID is stolen, since the application is made so that the stolen one cannot be used for a mobile terminal other than the user's one, a business model having very high security results to be constructed.

Moreover, a dealer downloads the application for dealer in the smartphone or personal computer of the dealer without setting up a dedicated line or terminal. The dealer can achieve by using the smartphone or personal computer on the basis of the application for dealer. Accordingly, it is possible to avoid a space for setting up the dedicated line and terminal. Accordingly, when a shop is temporarily located at an event site, the shop can achieve a credit card transaction by using the application for dealer.

### BRIEF DESCRIPTION OF DRAWINGS

Fig. 1 is a chart showing one example of a net card system structure.
Fig. 2 is a chart for explaining structure of the ID pattern.
Fig. 3 is a chart showing one example of the ID pattern.
Fig. 4 is a chart for explaining method for utilization of the ID pattern.
Fig. 5 is a flow chart showing a process for issuing the net card.
Fig. 6 is a flow chart showing a process for downloading the application.
Fig. 7 is a flow chart showing operation of the application for user for conducting authentication by using ID pattern or a password.
Fig. 8 is a flow chart showing another operation of the application for user for conducting authentication by using the ID pattern or password.
Fig. 9 is a flow chart showing communication among the user side application, the dealer side application and a database management company.

### DESCRIPTION OF EMBODIMENT

Explaining summary of structure of the present invention, a net card having an ID pattern is issued in addition of conventional usage card. The ID pattern is made of metal electrodes or the like and formed in a unique pattern different from another net card. A picture of the ID pattern is taken as an image by the camera in the user mobile terminal and converted into an authentication ID by the application previously downloaded to the mobile terminal. The personal authentication is conducted on the basis of the converted authentication ID. On the other hand, the dealer previously downloads the application for dealer to a dealer terminal. The personal authentication is conducted and the settlement are achieved between the dealer terminal and the user mobile terminal on the basis of a management program in the database management company. The mobile terminal is preferably a smartphone or personal computer. Especially, a smartphone having a built-in camera is excellent with the present invention, since the camera and terminal works together. The dealer terminal is preferably a mobile terminal when the dealer locates a temporary shop in an event site.

The present invention is hereinafter explained according to the drawings.

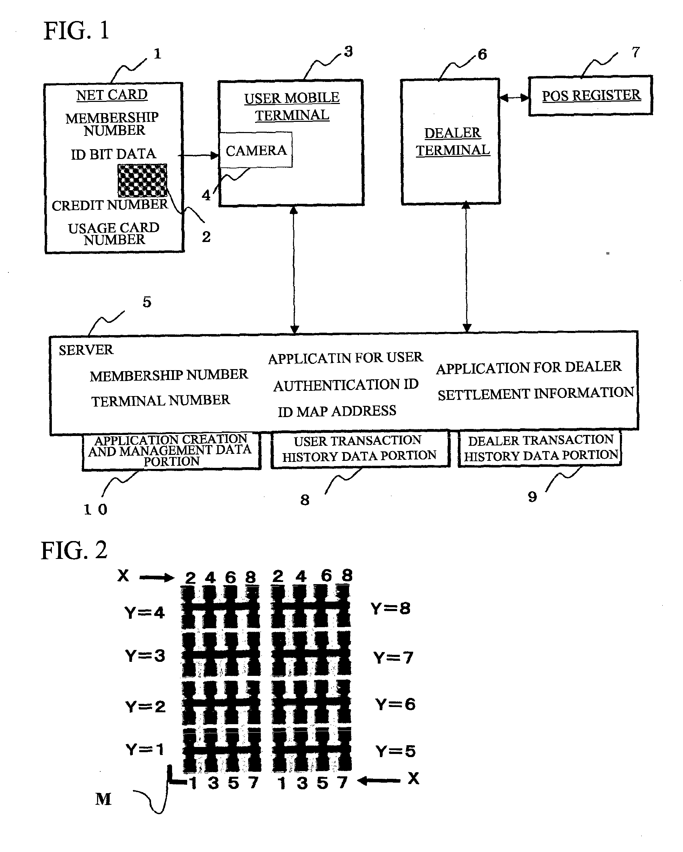

Fig. 1 is a system structure chart for providing a brief overview of the whole system relating to the present invention. As shown in Fig. 1, the ID pattern 2 is formed at a part in the net card 1. The ID pattern can be formed on right side of the card as indicated by the figure, but it may be formed at any place on the card. The ID pattern is held on the net card 1 in a suitable manner such as printing or sticking or the like. It is preferred for improving security that the net card 1 is issued separately from the usage card, but the net card and the usage card may not be separately made. The both cards may be made in one body for convenience.

In a conventional method of personal authentication adding to the second personal identification number, a card representative of a random number table is issued separately from the usage card. On the other hand, in the present invention, the ID pattern is introduced to enhance security for authentication without conducting the authentication by the second personal identification number.

Referring to Fig. 1, the picture of the ID pattern on the net card 1 is taken by the camera 4 in the user mobile terminal 3. The user mobile terminal 3 processes the ID pattern taken by the camera on the basis of the application for user downloaded from a server 5 of the database management company. The user may input the password to the user mobile terminal the user has. The password is also processed by the application for user. In a result of processing in the user mobile terminal, when the authentication succeeds, the user mobile terminal transmits to the server 5 a membership number of the net card, the number of a credit card selected for settlement and a dealer terminal number to be settled, as settlement information. The settlement information is recorded and accumulated as history information in the server 5.

On the other hand, the dealer terminal 6 fetches the sale proceeds from a POS register 7 in which the amount of sold goods is inputted. The dealer shows the sale proceeds to the user to ask user's consent. After the user gives consent, the dealer borrows the net card from the user and inputs the membership number thereof. Thereafter, the membership number and the dealer terminal number are transmitted to the server 5 to accept the settlement request of the sale proceeds. The server 5 compares the membership number and the dealer terminal number included in the settlement request received from the dealer terminal, with the settlement information previously received from the user mobile terminal and recorded in the server. If the result of comparison is in accord, the server transmits the credit card information for settlement to a credit company to get a settlement approval. When the settlement approval is obtained, the credit card transaction completes. The settlement data is accumulated as settlement record in a user transaction history data portion 8 and a dealer transaction history data portion 9 of the server 5, respectively. Further, the dealer terminal number is not necessarily included in the settlement information. In the case, only the membership number is compared.

Fig. 2 is a diagram showing one example of structure of the ID pattern 2. In Fig. 2, the black portion in the ID pattern forms electrodes made of metal or the like. The ID pattern is a pattern representative of bit structure indicating a bit address (X,Y) with an X-axis and Y-axis. Four bits of X=2, 4, 6 and 8 are arranged on the upper side of Y=4 of top left and then four bits of X=2, 4, 6 and 8 are arranged on the upper side of Y=8. Further, four bits of X=1, 3, 5 and 7 are arranged on the lower side of Y=4 and then four bits of X=1, 3, 5 and 7 are arranged on the lower side of Y=8. Bits on the X-axis are arranged from Y=3 to Y=5 in the same manner as the above-mentioned. Four bits of X=1, 3, 5 and 7 on the bottom right are arranged on the lower side of Y=5. Accordingly, the ID pattern shown in Fig. 2 is formed by a bit pattern including 64 bits of eight-by-eight X- and Y-axes. Additionally, a mark M on the bottom left is the origin mark indicating the coordinate origin. The origin mark is used for aligning the ID pattern when it is taken by camera. The structure of the ID pattern is not limited to the format of Fig. 2 and it may be formed by a QR code or a barcode or the other if it can form a reproducible bit arrangement.

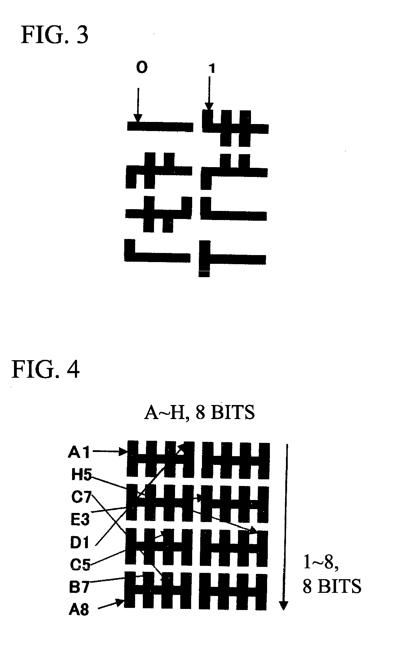

Fig. 3 shows a concrete example of the ID pattern. As seen from Fig. 3, eight transverse lines of Y-rows in Fig. 2 remain in unchanged form. A position on which a fuse mark exists on the upper or lower side of the Y-row is "1" and a position on which fuse mark does not exist thereon is "0". Comparing bit positions in Fig. 2 with Fig. 3, it would be comprehended that the upper side of Y=4 line is (0000) and the upper side of Y=8 line is (1110). In this way, it is possible to form ID pattern having a total of 64 bits comprising 8 bits in X-direction and 8 bits in Y-direction. Fig. 3 does not show an origin mark, but the pattern collation can be achieved by making alignment with reference to 8 transverse lines of Y-axis having 4 bits on upper and lower sides thereof respectively because the 8 transverse lines exist with no change for every ID pattern.

According to one embodiment of the present invention, the picture of the ID pattern as shown in Fig. 3 is taken by the camera as an analog image to be converted into the authentication ID by which the authentication is conducted. Fig. 4 is a diagram for explaining relation between the ID pattern and the authentication ID.

Fig. 4 shows an ID pattern similar to Fig. 2. There are 8 transverse lines. The four bits are arranged on the upper and lower sides of each transverse line, respectively. In Fig. 4, the eight bits arranged in a transverse direction are given signs of A, B, C, ...... H in order from left to right. The eight bits arranged in a longitudinal direction are given numbers of 1, 2, 3, ...... 8 in order from top down. Therefore, one of the signs and one of the numbers can indicate the address of any one bit in the bit pattern of 64 bits. That is to say, in Fig. 4, "A1" addresses the bit at left top corner. "H5" addresses the fifth bit from the top on the extreme right. Also "C7", "E3", ...... address specific bits in the bit pattern, respectively.

For example, the authentication ID is indicated by four-digit number. Each digit of the four-digit number is indicated by 4-bit signs. Accordingly, for example, the number "5" is expressed by (0101). Referring to the ID pattern in Fig. 3, the number "5" can be expressed by an ID map address (A1, A4, D1, E4). That is, one number is expressed by the ID map address. In the same manner, four map addresses are converted into the four-digit number to obtain the authentication ID.

Accordingly, in the present invention, a user is given ID pattern in a pattern fashion forming bits at random. The authentication ID is extracted from the ID pattern formed by bits at random on the basis of the ID map address.

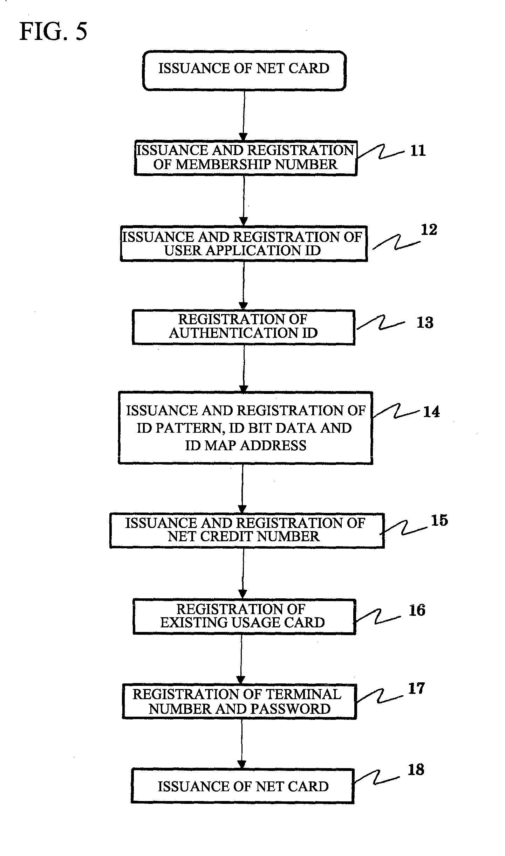

Fig. 5 is a flow chart showing process in which the management company issues a net card. The flow chart is explained referring Fig. 1.

When a person applies to become a member or user, at first in step 11, a membership number is issued to the person and registered in the server 5. And in step 12, an application ID for user is issued to the person and registered in the server 5.

In step 13, the authentication ID for identifying the user is registered in the server 5.

In next step 14, an ID pattern, an ID bit data incorporated in the ID pattern as a data map, ID map addresses for extracting the authentication ID from the ID bit data are produced and registered in the server 5. Further, the ID bit data may be a series of bit data format, if it can address a bit position with an ID map address.

In step 15, a net credit number is issued and registered in the server 5. In step 16, when the user hopes to selectively use one of the net card and an existing usage card, credit card information including card numbers and personal identification numbers of one or more existing usage cards are registered in the server 5. In step 17, an individual identification number given for the user mobile terminal is registered in the server 5 as a user terminal number for identifying the user mobile terminal and also a password for personal authentication is registered in the server 5. In the last step 18, a new net card is issued for the new member. On the new net card, the membership number, the ID pattern, the ID bit data, a net credit number and the existing usage card number and others are printed.

The application for user is software downloaded onto the user mobile terminal. The application functions at a time when the user executes authentication and settlement by means of the mobile terminal of the user. The application includes the application ID, ID bit data, ID map addresses. The application for user is addressed by the application ID and be read. The application ID for user is a code for specifying the application for user. An application creation and management data portion 10 in the server 5 stores and manages the application for user together with the membership number, application ID for user, authentication ID, ID pattern, ID bit data and ID map address, with respect to each user.

A net card to be newly issued includes the ID pattern, the membership number and credit number, but it never include information of the authentication ID, ID map address, application ID, personal identification number of credit card and the like. Further, the membership number may be indicated in barcode fashion on the net card.

Further, when the user hopes to additionally register another existing usage card, the user applies an additional registration of the existing usage card to the database management company and then a form for additional registration is sent from the server of the management company to the user. The user fills out the form with the credit information including the membership number, terminal number, password of user, and the card number and personal identification number of the usage card to be additionally registered. And the user sends back the form. By doing so, the additional registration completes.

Further, the user number indicates the membership number or the user terminal number.

The dealer can have business transaction not only at their location but also at a stall temporarily opening in an event site and others. When they hope to do business by using a mobile terminal at such a stall, it is preferable to make it possible that the dealer can do business by using their smartphones or personal computers with users. In the present invention, in view of the above, a card for dealer can be issued as a dealer member with very simple procedure.

A dealer applies to the database management company for becoming a dealer member. The database management company registers a dealer membership number, a dealer terminal number corresponding to the individual identification number of the dealer terminal and the bibliographic matters in the server 5. Thereafter, a dealer card printing the membership number is generally issued. The dealer can start business transaction. Further, the dealer number indicates the dealer membership number or dealer terminal number.

The user having the net card is required to previously download the application for user from the net card company onto a smartphone or personal computer the user possesses, before doing business transaction by using the net card.

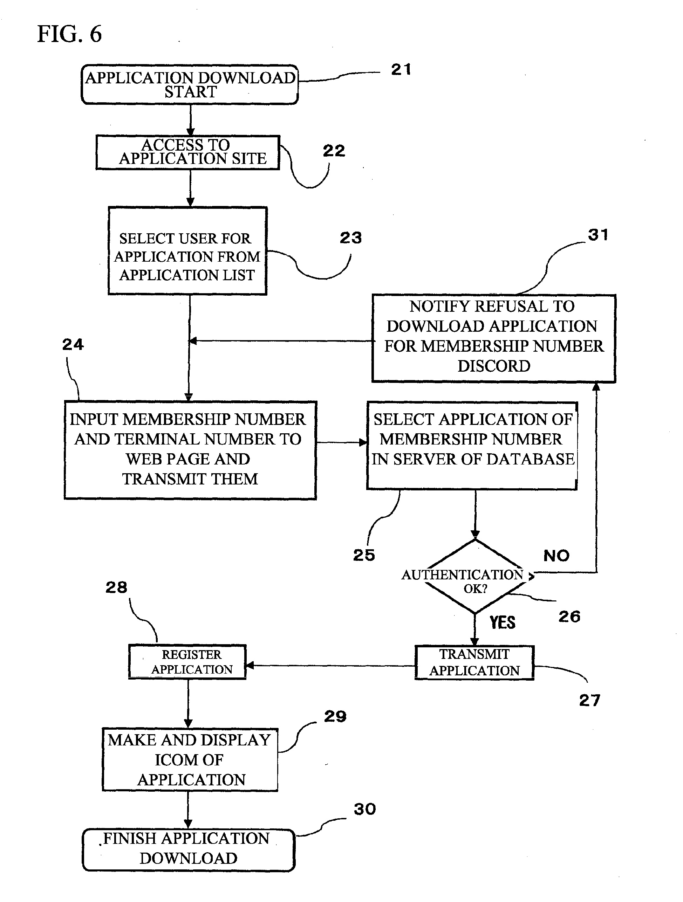

Fig. 6 is a flow chart showing a process for downloading the application.

In step 21 of Fig. 6, the user of the net card starts operation for downloading the application for user relating to the net card by using the user mobile terminal the user possesses. In step 22, the user accesses an application site of the database management company. In step 23, the user selects application for user from application list sent from the management company. As a result, in step 24, a downloaded web page is displayed and the user inputs the membership number and/or the terminal number of the user mobile terminal to the web page and thereafter the user sends it.

In step 25, the server 5 of the database management company receives the membership number and/or the user terminal number transmitted from the user and selects the application for user corresponding to the membership number from the database and then the personal authentication is executed. When the authentication is approved at step 26, the application for user corresponding to the membership number is transmitted to download it onto the user mobile terminal at step 27. The application for user includes the application ID, ID map addresses, program for converting into the authentication ID and program for executing credit card transaction between the user and dealer. Further, the application for user may include the ID bit data and authentication ID. In the case, the ID bit data is used for conducting authentication by inputting the password without using the ID pattern. Furthermore, the authentication ID included in the application is used for executing the authentication in the user mobile terminal itself without requiring authentication to the server.

In step 28, the user registers the downloaded application in the user mobile terminal and an icon for the application is made and the icon is displayed on the mobile terminal at step 29. As a result, the download is finished at step 30. The server 5 permits the user to download the application only one time and the user cannot again download the application without executing a specific procedure.

In step 26, when the authentication is not approved, it is notified at step 31 that download of the application is refused because the membership number discords. In the case, the user repeats the process of step 24.

The above-mentioned process explains the case where the user downloads the application for user. The dealer can download the application for dealer in accordance with process similar to Fig. 6, but the step 24 differs on the point that the dealer inputs dealer membership number and/or dealer terminal number to the download web page and sends it. Steps other than step 24 are identical with Fig. 6. Further, the application for dealer is software for doing business transaction with users.

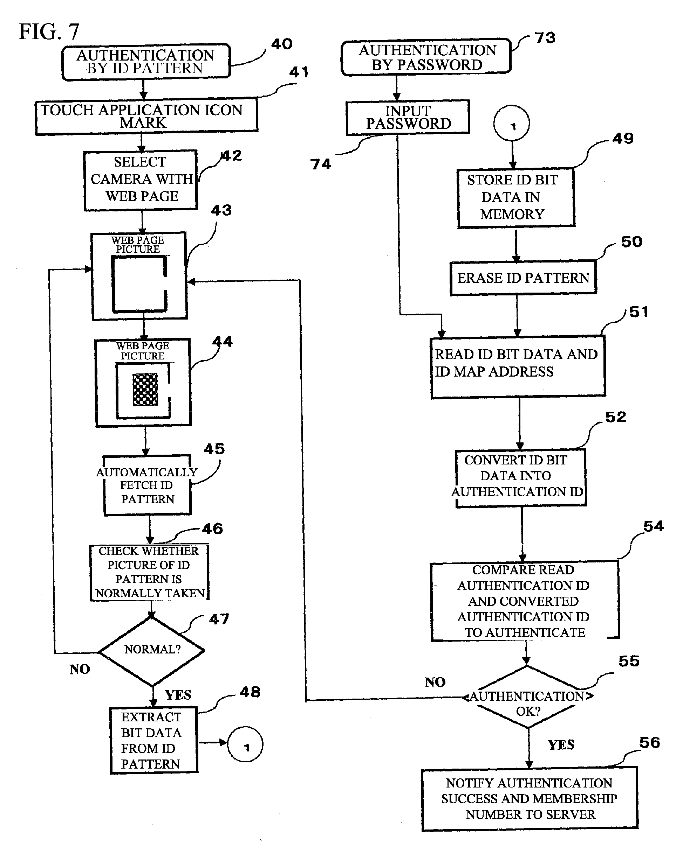

Next, it is explained how to authenticate using the ID pattern and the application. The mobile terminal is usually equipped with a camera function. The picture of the ID pattern on the net card can be taken by the camera as an image. Fig. 7 is a flow chart showing a process for taking the picture of the ID pattern and the taken ID pattern is converted into an authentication ID using the registered application to authenticate the authentication ID. Fig. 7 also includes another process for producing the authentication ID by inputting a password in place of taking the picture of ID pattern to authenticate the authentication ID.

First, a method for authenticating using the ID pattern is explained in accordance with Fig. 7. Since the smartphone usually have the camera function, the ID pattern printed on a member card can be taken as an image.

In Fig. 7, the authentication by the ID pattern starts from step 40. In step 41, an icon mark of an application for authentication on the smartphone is touched by a finger and in step 42 the web page picture is displayed to activate the camera function. The web page displays a box into which the ID pattern fits, as shown in step 43. In step 44, the position of the camera is so adjusted that the ID pattern fits into the box to take the picture of the ID pattern by the camera. In step 45, the taken ID pattern is automatically stored in a memory in analog format. In step 46, it is checked and processed whether or not the taken ID pattern of the analog format is normally photographed. The check and process are to ensure that the ID pattern taken by the camera fits into the box with suitable size and resolution. In step 47, if it is judged that the image of the ID pattern is not normally taken, it returns to step 43 and the picture of the ID pattern is again taken.

In step 47, when it is determined that it is normal, in step 48 data of 64 bits are extracted from the ID pattern of analog format to be converted to an ID bit data of 64 bits. The ID bit data is stored in a memory at step 49. Since the ID bit data corresponding to the ID pattern is included in the application for user downloaded, the stored ID bit data can be compared with that included in the application. After the ID pattern is stored as the ID bit data, the ID pattern is immediately erased not to keep as a photograph for improving security.

In step 51, the ID bit data stored in the memory at step 49 and the ID map address previously downloaded are read out. In step 52, the 16 bit data is extracted from the ID bit data on the basis of the ID map address to convert it into the authentication ID forming four-digit number. In step 54, the converted authentication ID is compared with the authentication ID fetched together with the application to conduct authentication. In step 55, the result of the authentication is judged. Further, explanation is made about the authentication ID formed by the four-digit number as an example, but the authentication ID is not limited to it, for example, may be ten-digit number or symbol.

If the authentication succeeds here, the user mobile terminal informs the server 5 of the database management company that the authentication is approved and informs also the membership number to the server. Since the server is set so as to be able to do business transaction by the net card only after the authentication of the net card succeeds, the server becomes standby state enabling business transaction by a credit card. When the user does transaction in the front of a store or transaction of internet banking or internet shopping, the user inputs his or her membership number to confirm that the authentication is approved and thereafter the user can start business transaction by the net card.

If the authentication does not succeed at step 55, it returns to step 43 to again carry out the operation from taking the picture of the ID pattern.

The authentication can be conducted not by taking the picture of the ID pattern by the camera but by using the password. Hereinafter, the authentication method by the password is explained.

In Fig. 7, the authentication by the password is entered from step 73. In step 74, a password inputted and the process proceeds to step 51 so that the application reads out the ID bit data and the ID map address in response to input of the password. And then steps 52-56 are executed in the same manner as the above-mentioned.

Further, the step 51 is set so that the ID bit data is read out from the memory in which it is stored at the step 49. Thereby, the authentication by the password can be executed only after once the authentication by the ID pattern is previously executed. Accordingly, the ID bit data is extracted from the image of the ID pattern enabling to encode. The extracted ID bit data is stored in the memory. Thereafter, the authentication can be conducted by inputting the password. Accordingly, the security is improved and user's convenience is satisfied.

Also, in the authentication by the password, if the ID bit data is included in the application for user downloaded onto the user mobile terminal, the authentication can be achieved by the password with no using the ID pattern. This means that the user can achieve the authentication by the password from the beginning of use of the net card.

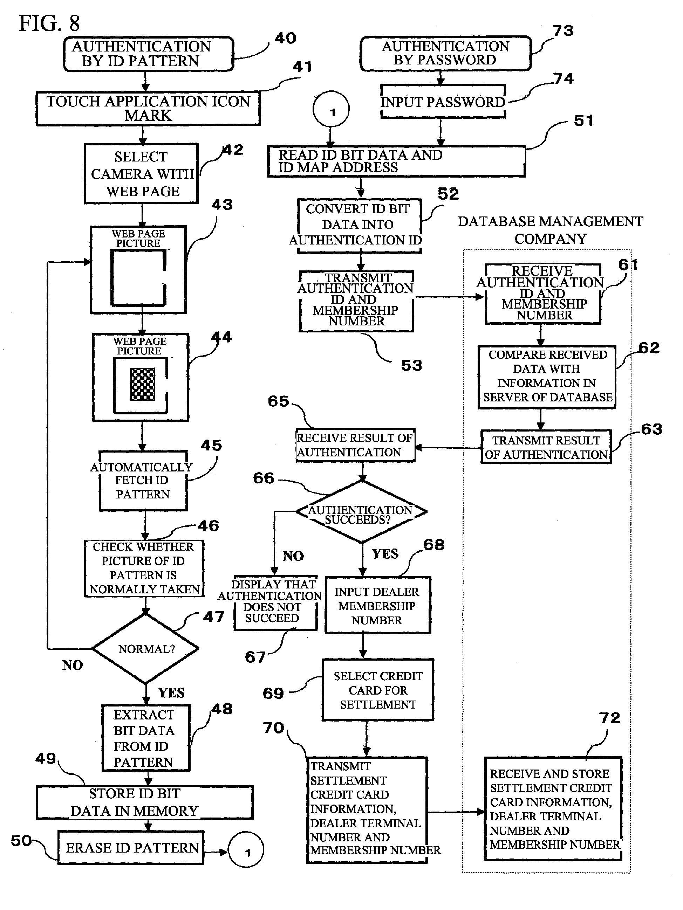

In the embodiment shown in Fig. 7, an example for executing the authentication in the user mobile terminal is explained, but in Fig. 8, an example for executing in the server 5 is explained. In Fig. 8, the same reference numerals as Fig. 7 indicates steps performing the same function as Fig. 7.

In Fig. 8, the operation for taking the picture of the ID pattern by the camera and conducting the authentication is entered from step 40. The steps from 41 to 50 are the same function as Fig. 7.

In step 51, the 16 bit data is extracted from the ID bit data stored in the memory at step 49 or the ID bit data downloaded together with the application on the basis of the ID map address previously downloaded. In step 52, the 16 bit data is converted into the authentication ID of four-digit number. The conversion is achieved in the manner explained in accordance with Fig. 4. In step 53, the converted authentication ID and the membership number are transmitted to the server of the database management company.

In step 61, the server receives the authentication ID and the membership number sent from the mobile terminal and then in step 62 the received information is compared with information recorded in the database of the server to conduct the authentication. In next step 63, the result of the authentication is transmitted to the user mobile terminal.

In step 65, the mobile terminal receives the result of the authentication and in step 66 it is checked whether or not the authentication succeeds. If the authentication does not succeed, step 67 the fact is displayed. In the case, the user again tries the operation from step 41. If the step 66 judges that the authentication succeeds, in step 68 a format for input is displayed on the mobile terminal. The user asks the dealer membership number from the dealer and inputs it in the format. The step 68 is significant in that the user permits the dealer a credit card transaction, but there are many cases where it is convenience to eliminate the step 68.

In nest step 69, the user displays a selection screen of credit cards and selects a card to be used for settlement. In step 70, the user transmits information of the settlement credit card selected for settlement, the dealer membership number and the user membership number to the server. Further, the dealer terminal number may be inputted in place of the dealer membership number, but the input of the dealer number may be eliminated.

On the other hand, in step 72 the server receives their information and stores them in the database. As a result, the server is in standby state waiting for receiving the user membership number and the dealer terminal number from the dealer having the dealer membership number. Thereby, secure transactions can be achieved.

The above explains the authentication method for taking the picture of the ID pattern and converting the ID pattern image into the ID bit data to conduct the authentication, but it is inconvenient and troublesome to take the picture of the ID pattern by the camera each actual shopping. In order to avoid such inconvenience, once the picture of the ID pattern is taken by the camera and it is converted into the ID bit data, the ID bit data is stored in the memory of the user mobile terminal. Thereafter, the ID bit data is automatically read from the memory by inputting the password without using the camera for taking the picture of the ID pattern. This is convenient for the user. Further, the ID bit data may be downloaded together with the application and stored in the memory. The ID bit data is specific to the user mobile terminal and only the ID bit data is not independently transmitted through communication line. Therefore, there is extremely low possibility that the ID bit data is abused by someone else.

The step 73 is an entrance for conducting the authentication by inputting the password. At first, in step 74, the password is inputted and then it is proceeded to step 51 in which the ID bit data and the ID map address is automatically read by the operation of the application for user. Hereinafter, the authentication is conducted in accordance with the above-mentioned processing. In this embodiment, the password can be effectively used for only the user mobile terminal in which the application for user is downloaded. Other mobile terminals cannot have the same application for user and therefore the password is invalid for such other mobile terminals. As a result, there is no possibility that the password is abused by anyone else.

There is another authentication method not showing in Fig. 7. For example, in case the ID bit data is not downloaded together with the application and the picture of the ID bit data cannot be taken by the camera because the camera is malfunction, the user performs key-input of the ID bit data printed on the net card to the mobile terminal, in place of the ID pattern input by the camera, and the inputted ID bit data is stored to the memory. In order to performing the above procedure, the password is inputted at the beginning and then the ID bit data indicated on the net card is manually inputted and thereafter the process proceeds to step 49. In the case, step 50 is skipped.

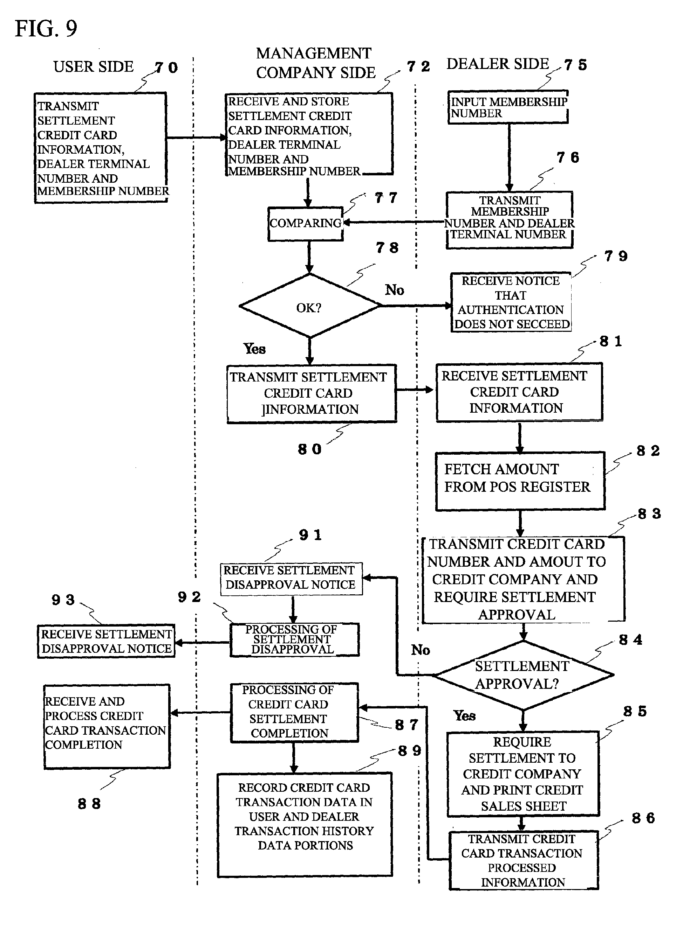

The above explanation is made about the operation between the user mobile terminal and the server of the database management company. Following the process, flow of information among the user side, the dealer side and the server side is explained on the basis of Fig. 9.

When the user agrees to goods to be purchased and a selling price the dealer offers, in step 75, the dealer borrows the net card from the user and inputs the user membership number to the dealer terminal, or the user may input the user membership number to the dealer terminal. The membership number can be inputted by means of key input or a card reader. In the case of internet banking or internet shopping, if the user applies for a transaction, a format for input is transmitted to the user mobile terminal. The user fills out the format with the membership number and the other necessary matters and sends back it.

In step 76, the dealer terminal transmits the user membership number and the dealer membership number to the server. In step 77, the server compares the user membership number and the dealer membership number received from the user mobile terminal with them received from the dealer terminal, respectively. Further, when the step 68 is skipped, comparison of the dealer membership numbers is not made. If the result of the comparison is mismatch, the server transmits notice of mismatch to the dealer terminal at step 78. The dealer receives the notice at step 79 and recognizes that it is not possible to conduct the credit card transaction.

On the other hand, in step 78, if the result of the comparison is matching, in step 80 the information of the settlement credit card is transmitted to the dealer terminal and in step 81 the dealer terminal receives the information of the settlement credit card. In step 82, amount of money to be paid is fetched from a POS register and then in step 83 the dealer terminal transmits the credit-card number and the amount of money to be paid to a credit company to require the settlement approval.

A result of the settlement approval request is checked at step 84. If the check result is NO, it is transmitted to the server. The server receives a settlement disapproval notice at step 91 and executes processing of settlement disapproval at step 92 and then informs of it to the user mobile terminal. The user mobile terminal receives the settlement disapproval notice at step 93. Therefore, the user pays money or again may try the credit card transaction with another credit card. Further, the settlement disapproval information may be set to be recorded in the dealer transaction history data portion and the user transaction history data portion.

In step 84, if the settlement request succeeds, in step 85 the dealer requires the settlement to credit company and prints a sales sheet of credit card transaction. Thereafter, in step 86 credit card settlement completion information is transmitted to the server.

In step 87, the server receives the credit card settlement completion information and executes processing of the credit card transaction completion and then transmits the notice of the credit card transaction completion to the user mobile terminal.

In step 88, the user mobile terminal receives the credit card transaction completion notice and displays it. Accordingly, the user can confirm that the credit card transaction completes with no trouble.

After the processing of the credit card transaction completion is finished at step 87, in step 89 the data of the credit card settlement completion information is recorded and accumulated in the user transaction history data portion 8 and the dealer transaction history data portion 9.

The user or the dealer can access the server of the database management company by using individual terminal and read history information in the user transaction history data portion 8 or the dealer transaction history data portion 9 under a predetermined procedure to confirm transactions of the past.

As mentioned above, according to the present invention, the net card of the user and the user mobile terminal are set up so that they function together. Even if the net card is lost or stolen, the net card never be used for an terminal other than the user mobile terminal. As far as the net card and the user mobile terminal are not stolen together, an unauthorized use is prevented and a high security is maintained.

Also, a user application ID is allotted to the application for user downloaded to the user mobile terminal and corresponds to only the net card of the user, so that the application for user can be utilized only for the net card. Moreover, the application for user can be downloaded only onto the user mobile terminal having the terminal number specific to the terminal and therefore the application cannot be downloaded to another mobile terminal. Accordingly, the application for user is prevented from being illegally downloaded and high security is maintained. Further, the ID bit data cannot be converted to the authentication ID if the application is stored in the mobile terminal.

Further, since the password to be inputted to the user mobile terminal is different from the authentication ID obtained by converting the ID bit data, even if they leak from the user mobile terminal or the server, they are protected from unauthorized use.

Furthermore, the ID pattern formed at random, the authentication ID and the ID map address for converting the ID pattern into the authentication ID are formed at time when the net card is issued and set to be used only for the user mobile terminal as one. Accordingly, they cannot be used for another mobile terminal or another application, respectively and high security is maintained.

Moreover, the ID pattern or the password is required to be inputted to the user mobile terminal, but the credit number included in the credit card information is not required to be inputted thereto. The dealer can uses only the credit number transmitted from the server. The dealer is not required to input the credit number. Accordingly, the credit number is secure from phishing.

In addition, in the present invention, the net transaction can be set so that the net transaction usually performed now can be achieved only after the security check relating to the present invention completes. That is to say, if the authentication does not succeed in security check of the present invention, any normal internet transaction cannot be started. As a result, the user can perform a net transaction relating to the present invention without a third party known about the fact that the first hurdle relating to the present invention exists. Even if somebody else steals the authentication ID or password by means of phishing or skimming during a net transaction relating to the present invention, somebody else cannot get past the first hurdle, so that an illegal internet transaction is avoided.

The above explanation is made about business transactions at a shop or location, but the present invention is not limited to the above embodiments. For example, the dealer terminal may be any terminal linked to the internet. Further, in the present invention, various changes and modifications could be made therein, by one skilled in the art, without varying from the scope and spirit of the present invention.

The above explanation is made about that the user performs transactions at a shop or location, but the present invention may apply to an internet shopping site or net-bank.

### REFERENCE SIGNS LIST

- 1: net card
- 2: ID pattern
- 3: user mobile terminal
- 4: camera
- 5: server
- 6: dealer terminal
- 8: user transaction history data portion
- 9: dealer transaction history data portion
- 10: application creation and management data portion

## Claims

1. An authentication and settlement system using mobile terminals, comprising:
an application downloaded from a server (5) of a management company including at least a program for executing authentication and settlement, an ID map address and a user number;
a first input device (40-50, 73, 74) for inputting the ID information;
a conversion device (51, 52) for converting the ID information into authentication ID by the application;
an authentication device (52, 53, 61-63, 65, 66) for authenticating the authentication ID by the application;
a first transmission device (70) for transmitting a user number and credit information indicated on a net card to the server;
a second input device (75) for inputting the user number;
a second transmission device (76) for transmitting the user number and a dealer number registered in the management company to the server;
a third transmission device (77, 78, 80) for transmitting the credit information to a dealer terminal when the user numbers received from the first and second transmission devices are checked and accord with each other; and
a settlement unit for executing processing for settlement of the amount to be paid by the user on the basis of the credit information; and further comprising:
wherein, further comprising:
a user mobile terminal (3) including the first input device, conversion device, the authentication device and the first transmission device;
the server (5) including the third transmission device; and
the dealer terminal (6) including the second input device, the second transmission device and the settlement device.

2. A system according to Claim 1, wherein the first input device is a camera equipped for the user mobile terminal to take a picture of an ID pattern printed on the net card issued by the management company to the user.

3. A system according to Claim 1, wherein the first input device is a sign input device (74) in the user mobile terminal for inputting a predetermined password.

4. A system according to Claim 2, wherein the first input device further including a sign input device in the user mobile terminal for inputting a predetermined password to select one of the camera and the sign input device.

5. A system according to Claim 1, wherein the conversion device reads an ID bit data and the ID map address in response to the input of the ID information to convert the ID bit data to the authentication ID on the basis of the ID map address.

6. A system according to Claim 1, wherein
the application downloaded includes the authentication ID of the user previously registered in the server, and
the authentication device compares the authentication ID converted by the conversion device with the authentication ID included in the application to conduct the authentication.

7. A system according to claim 1, wherein the authentication device transmits the converted authentication ID and the user number to the server, and the server compares the received authentication ID and user number with the authentication ID and user number registered in the server to send back to the user mobile terminal a notice that the authentication succeeds when the result of the comparison accords together.

8. A system according to Claim 1, wherein the credit information transmitted from the third transmission device is credit information of a credit card which the user selects one of credit information of a plurality of credit cards previously set and indicated on the net card.

9. A system according to Claim 1, wherein
the settlement unit has a transaction completion notice unit (86) for transmitting to the server a transaction completion notice that the settlement execution is finished, and
the server has a transaction history data portion (8, 9) for recording and accumulating the transaction completion notice received from the transaction completion notice unit as settlement history information.

10. A system according to Claim 9, wherein the transaction history data portion has a recording unit for recording the settlement history information to a user transaction history data portion (8) and a dealer transaction history data portion (9), respectively.

11. A system according to Claim 10, wherein the settlement history information is made accessible by accessing the user transaction history data portion from the user mobile terminal.

12. A system according to Claim 10, wherein the settlement history information is made accessible by accessing the dealer transaction history data portion from the dealer terminal.

13. A system according to Claim 9, wherein the server has a notice unit (87) for informing the transaction completion notice to the user mobile terminal when the server receives the transaction completion notice from the dealer terminal, and the user mobile terminal has a settlement display device (88) for displaying the settlement completion notice when the user mobile terminal receives the settlement completion notice.

14. A system according to Claim 1, wherein the user mobile terminal is a smartphone.

15. A system according to Claim 1, wherein the dealer terminal is a smartphone or a personal computer.

16. A system according to Claim 1, wherein the settlement unit can function only after the authentication succeeds in the authentication device.

17. An authentication device in a mobile terminal of a user comprising:
an application, downloaded from a management company, including a program for executing an authentication, an ID bit data, and ID map addresses for addressing a plurality of positions in the ID bit data; and
a first input device for inputting a password;
wherein the application converts the ID bit data to an authentication ID on the basis of the ID map addresses in response to input of the password from the first input device.

18. An authentication device according to Claim 17, further comprising:
a second input device including a camera (4) for taking a picture of an ID pattern shown on a net card issued by the management company to the user; and
a memory (48, 49) for storing an ID bit data extracted from the ID pattern,
wherein the application converts the ID bit data read from the memory to the authentication ID on the basis of the ID map addresses, in order to select and use one of the first and second input devices.

19. An authentication and settlement method by using mobile terminal, after a user and a dealer agree on goods and price, comprising steps of that:
a user mobile terminal of the user converts ID information to an authentication ID and transmits a user number and credit information to a server, when the authentication based on the authentication ID succeeds
the server stores the user number and the credit information in a memory in the server and be in standby state;
after a user number of the user is inputted to a dealer terminal of the dealer, the dealer terminal transmits the inputted user number and a dealer number of the dealer registered in the server to the server;
the server compares the user number and the dealer number transmitted from the dealer terminal with the user number stored in the memory and the dealer number registered in the server, respectively, and transmits the credit information to the dealer terminal, if they accord each other;
the dealer terminal executes settlement processing on the basis of the credit information from the server and informs to the server of a notice of settlement completion; and
the server registers a settlement processing data in a transaction history data portion as transaction history data on the basis of the settlement completion notice from the dealer terminal.

20. A user mobile terminal comprising:
an input device for inputting ID information;
a conversion device for producing an authentication ID on the basis of the ID information;
an authentication device for executing operation for authentication on the basis of the authentication ID; and
a transmission device for transmitting a user number registered in a server of the management company and credit information using for settlement to the server.

21. A server of a management company, comprising:
a database for registering user information including an ID bit data using for authentication, an authentication ID, a user number and credit information of a user, and dealer information including a dealer number of a dealer;
an authentication device for executing a personal authentication of the user when the authentication device receives the user number and the authentication ID from a user mobile terminal;
a first transmission device for transmitting a result of the personal authentication to the user mobile terminal;
a memory for temporarily storing therein the user number and the credit information received from the user mobile terminal authenticated by the authentication device to be a standby state;
a second transmission device for transmitting the credit information to a dealer terminal when the user number received from the user mobile terminal are checked and coincides; and
a transaction history data portion for registering a history data of transaction completion at a time of receiving a transaction completion notice from the dealer terminal.

22. A credit card transaction terminal comprising:
an input device for inputting a user number registered in a server of a management company, after a dealer and a user agree on business transaction;
a first transmission device for transmitting the user number and a dealer number registered in the server to the server;
a settlement processing unit for executing a credit card transaction at a time of receiving credit information of the user from the server; and
a second transmission device for transmitting a settlement completion notice to the server when settlement processing is completed.

## Amended claims

### Amended claims under Art. 19.1 PCT

1. (Amended) An authentication and settlement system using mobile terminal, comprising:
an application downloaded from a server (5) of a management company including at least a program for executing authentication and producing credit information for settlement, an ID map address and a user number;
a first input device (40-50, 73, 74) for inputting the ID information;
a conversion device (51, 52) for converting the ID information into authentication ID by the application;
an authentication device (52, 53, 61-63, 65, 66) for authenticating the authentication ID by the application;
a first transmission device (70) for transmitting a user number and credit information indicated on a net card to the server;
a second input device (75) for inputting the user number;
a second transmission device (76) for transmitting the user number and a dealer number registered in the management company to the server;
a third transmission device (77, 78, 80) for transmitting the credit information to a dealer terminal when the user numbers received from the first and second transmission devices are checked and accord with each other; and
a settlement unit for executing processing for settlement of the amount to be paid by the user on the basis of the credit information; and further comprising:
wherein, further comprising:
a user mobile terminal (3) including the first input device, conversion device, the authentication device and the first transmission device;
the server (5) including the third transmission device; and
the dealer terminal (6) including the second input device, the second transmission device and the settlement device.

2. A system according to Claim 1, wherein the first input device is a camera equipped for the user mobile terminal to take a picture of an ID pattern printed on the net card issued by the management company to the user.

3. A system according to Claim 1, wherein the first input device is a sign input device (74) in the user mobile terminal for inputting a predetermined password.

4. A system according to Claim 2, wherein the first input device further including a sign input device in the user mobile terminal for inputting a predetermined password to select one of the camera and the sign input device.

5. A system according to Claim 1, wherein the conversion device reads an ID bit data and the ID map address in response to the input of the ID information to convert the ID bit data to the authentication ID on the basis of the ID map address.

6. A system according to Claim 1, wherein
the application downloaded includes the authentication ID of the user previously registered in the server, and
the authentication device compares the authentication ID converted by the conversion device with the authentication ID included in the application to conduct the authentication.

7. A system according to claim 1, wherein the authentication device transmits the converted authentication ID and the user number to the server, and the server compares the received authentication ID and user number with the authentication ID and user number registered in the server to send back to the user mobile terminal a notice that the authentication succeeds when the result of the comparison accords together.

8. A system according to Claim 1, wherein the credit information transmitted from the third transmission device is credit information of a credit card which the user selects one of credit information of a plurality of credit cards previously set and indicated on the net card.

9. A system according to Claim 1, wherein
the settlement unit has a transaction completion notice unit (86) for transmitting to the server a transaction completion notice that the settlement execution is finished, and
the server has a transaction history data portion (8, 9) for recording and accumulating the transaction completion notice received from the transaction completion notice unit as settlement history information.

10. A system according to Claim 9, wherein the transaction history data portion has a recording unit for recording the settlement history information to a user transaction history data portion (8) and a dealer transaction history data portion (9), respectively.

11. A system according to Claim 10, wherein the settlement history information is made accessible by accessing the user transaction history data portion from the user mobile terminal.

12. A system according to Claim 10, wherein the settlement history information is made accessible by accessing the dealer transaction history data portion from the dealer terminal.

13. A system according to Claim 9, wherein the server has a notice unit (87) for informing the transaction completion notice to the user mobile terminal when the server receives the transaction completion notice from the dealer terminal, and the user mobile terminal has a settlement display device (88) for displaying the settlement completion notice when the user mobile terminal receives the settlement completion notice.

14. A system according to Claim 1, wherein the user mobile terminal is a smartphone.

15. A system according to Claim 1, wherein the dealer terminal is a smartphone or a personal computer.

16. A system according to Claim 1, wherein the settlement unit can function only after the authentication succeeds in the authentication device.

17. An authentication device in a mobile terminal of a user comprising:
an application, downloaded from a management company, including a program for executing an authentication, an ID bit data, and ID map addresses for addressing a plurality of positions in the ID bit data; and
a first input device for inputting a password;
wherein the application converts the ID bit data to an authentication ID on the basis of the ID map addresses in response to input of the password from the first input device.

18. An authentication device according to Claim 17, further comprising:
a second input device including a camera (4) for taking a picture of an ID pattern shown on a net card issued by the management company to the user; and
a memory (48, 49) for storing an ID bit data extracted from the ID pattern,
wherein the application converts the ID bit data read from the memory to the authentication ID on the basis of the ID map addresses, in order to select and use one of the first and second input devices.

19. An authentication and settlement method by using mobile terminal, after a user and a dealer agree on goods and price, comprising steps of that:
a user mobile terminal of the user converts ID information to an authentication ID and transmits a user number and credit information to a server, when the authentication based on the authentication ID succeeds
the server stores the user number and the credit information in a memory in the server and be in standby state;
after a user number of the user is inputted to a dealer terminal of the dealer, the dealer terminal transmits the inputted user number and a dealer number of the dealer registered in the server to the server;
the server compares the user number and the dealer number transmitted from the dealer terminal with the user number stored in the memory and the dealer number registered in the server, respectively, and transmits the credit information to the dealer terminal, if they accord each other;
the dealer terminal executes settlement processing on the basis of the credit information from the server and informs to the server of a notice of settlement completion; and
the server registers a settlement processing data in a transaction history data portion as transaction history data on the basis of the settlement completion notice from the dealer terminal.

20. (Amended) A user mobile terminal to which an application including a program for authentication and ID map address is downloaded from a server of a management company, the user mobile terminal comprising:
an input device for inputting ID information;
a conversion device for producing an authentication ID on the basis of the ID information and the ID map address;
an authentication device for executing operation for authentication on the basis of the authentication ID and the program; and
a transmission device for transmitting a user number registered in a server of the management company and credit information for using for settlement to the server to execute credit card transaction.

21. A server of a management company, comprising:
a database for registering user information including an ID bit data using for authentication, an authentication ID, a user number and credit information of a user, and dealer information including a dealer number of a dealer;
an authentication device for executing a personal authentication of the user when the authentication device receives the user number and the authentication ID from a user mobile terminal;
a first transmission device for transmitting a result of the personal authentication to the user mobile terminal;
a memory for temporarily storing therein the user number and the credit information received from the user mobile terminal authenticated by the authentication device to be a standby state;
a second transmission device for transmitting the credit information to a dealer terminal when the user number received from the user mobile terminal are checked and coincides; and
a transaction history data portion for registering a history data of transaction completion at a time of receiving a transaction completion notice from the dealer terminal.

22. (Amended) A credit card transaction terminal to which a program for executing settlement is downloaded from a server of management company, the credit card transaction terminal comprising:
an input device for inputting a user number registered in the server, after a dealer and a user agree on business transaction;
a first transmission device for transmitting the user number and a dealer number registered in the server to the server;
a settlement processing unit for executing a credit card transaction in accordance with the program at a time of receiving credit information of the user transmitted from the server in response to the user number and the dealer number from the first transmission device; and
a second transmission device for transmitting a settlement completion notice to the server when settlement processing is completed.
